# EUROPÄISCHE PATENTANMELDUNG

(11) **EP 3 162 184 A1**
(43) Veröffentlichungstag der Anmeldung: **03.05.2017**
(21) Anmeldenummer: 16401071.2
(22) Anmeldetag: 21.10.2016
(51) Int. Cl.: A01D 43/063

(54) **VORRICHTUNG ZUR PFLEGE VON GRÜNFLÄCHEN**

(30) Priorität: 28.10.2015 DE 102015118368
(71) Anmelder: Amazonen-Werke H. Dreyer GmbH & Co. KG, 49205 Hasbergen (DE)
(72) Erfinder: Klein, Laurent, 57910 HAMBACH (FR)

(57) **Zusammenfassung**

Beschreiben wird eine Vorrichtung (1) zur Pflege von Grünflächen (2), insbesondere von Rasen- und Wiesenflächen, umfassend ein angetriebenes Fahrzeug (3) und eine mit dem Fahrzeug (3) koppelbare Bearbeitungseinheit (4), wobei das Fahrzeug (3) zur Ankopplung der Bearbeitungseinheit (4) eine Führungshülse (5) aufweist, in die eine Fördereinrichtung (6) der Bearbeitungseinheit (4) einführbar ist. Die erfindungsgemäße Lösung besteht darin, dass die Führungshülse (5) einen sich in Einführungsrichtung der Fördereinrichtung (6) zumindest abschnittsweise verjüngenden Querschnitt aufweist.

## Beschreibung

Die Erfindung betrifft eine Vorrichtung zur Pflege von Grünflächen gemäß dem Oberbegriff des Patentanspruches 1.

Eine derartige Vorrichtung zur Pflege von Grünflächen, insbesondere von Rasen- und Wiesenflächen, ist beispielsweise in der EP 0 712 568 B1 beschrieben. Die Vorrichtung ist gemäß dem Offenbarungsgehalt der Druckschrift als ein mit einem Antriebsmotor ausgestattetes, also angetriebenes Fahrzeug ausgeführt, das eine als Mähwerk ausgeführte Bearbeitungseinheit aufweist. Diese Bearbeitungseinheit wird über eine geeignete Kupplung mit dem Fahrzeug verbunden, so dass nach der Kopplung der beiden Baueinheiten die Vorrichtung zur Pflege von Grünflächen einsatzbereit ist. Die Bearbeitungseinheit besteht hierbei aus einem quer zur Fahrtrichtung ausgerichteten, um eine Rotationsachse drehbaren und Bearbeitungswerkzeuge aufweisenden Bearbeitungsrotor, der in einem Gehäuse angeordnet ist. Der Bearbeitungsrotor verfügt entlang seines Außenumfanges über eine Vielzahl einzelner Bearbeitungswerkzeuge, die je nach Ausführung dazu geeignet sind, die Grünfläche zu pflegen, das heißt, beispielsweise einen Rasen abzumähen, ihn zu vertikutieren oder einfach Laub beziehungsweise Unrat aufzusammeln. Bezogen auf die Fahrtrichtung sind vor und hinter dem Bearbeitungsrotor darüber hinaus durch einen Höhenführungsrahmen verbundene Führungselemente vorhanden, wobei es sich hierbei einerseits um Laufräder und diesen gegenüberliegend, also rückseitig des Bearbeitungsrotors, um eine Druckwalze handelt. Zur Einstellung der Arbeitshöhe des Bearbeitungsrotors und damit der Schnitthöhe weist die Vorrichtung zur Pflege von Grünflächen nach der EP 0 712 568 B1 eine Verstelleinrichtung auf.

Um zwischen dem Fahrzeug und der Bearbeitungseinheit eine lösbare Verbindung herstellen zu können, ist einerseits die bereits erwähnte Kupplung und andererseits in dem Fahrzeug eine Führungshülse vorhanden, in die eine Fördereinrichtung der Bearbeitungseinheit eingeführt wird, so dass beispielsweise von der als Mähwerk ausgeführten Bearbeitungseinheit abgetrennte Pflanzenbestandteile über die Fördereinrichtung in einen an dem Fahrzeug vorhandenen Auffangbehälter transportiert werden können. Die Fördereinrichtung weist in einem Förderrohr drehbar angeordnete Förderschnecken auf.

Dabei hat es sich als problematisch herausgestellt, dass bisher die Führungshülse über ihre gesamte Länge als ein hohler Kreiszylinder, also röhrenförmig ausgeführt ist, weil dadurch die Einführung der Fördereinrichtung in die Führungshülse relativ viel Geschick erfordert beziehungsweise sich teilweise schwierig gestaltet.

Die Aufgabe der Erfindung besteht darin, eine Vorrichtung zur Pflege von Grünflächen bereitzustellen, deren Aufbau möglichst einfach gehalten ist und bei der die Kopplung zwischen dem Fahrzeug und der Bearbeitungseinheit verbessert ist.

Die Aufgabe wird mit den Merkmalen des Patentanspruches 1 gelöst.

Weitere Ausgestaltungen sind in den sich anschließenden Unteransprüchen widergegeben.

Eine Vorrichtung zur Pflege von Grünflächen, insbesondere von Rasen- und Wiesenflächen, umfassend ein angetriebenes Fahrzeug und eine mit dem Fahrzeug koppelbare Bearbeitungseinheit, wobei das Fahrzeug zur Ankopplung der Bearbeitungseinheit eine Führungshülse aufweist, in die eine Fördereinrichtung der Bearbeitungseinheit einführbar ist, wurde erfindungsgemäß dahingehend weitergebildet, dass die Führungshülse einen sich in Einführungsrichtung der Fördereinrichtung zumindest abschnittsweise verjüngenden Querschnitt aufweist.

Die erfindungsgemäße Verjüngung des Querschnittes der Führungshülse in Einführungsrichtung der Fördereinrichtung bedeutet anders ausgedrückt, dass zumindest der einführungsseitige Mündungsbereich einen vergrößerten Öffnungsquerschnitt gegenüber dem restlichen Querschnitt der Führungshülse aufweist. Dies ist eine logische Konsequenz des Umstandes, dass das in die Führungshülse eingeführte Ende der Fördereinrichtung am Ende der Führungshülse geführt beziehungsweise gelagert werden muss und dementsprechend in diesem Teil der Führungshülse beide Elemente einen zueinander passenden, also annähernd gleichen Querschnitt aufweisen müssen. Durch den erweiterten Mündungsbereich der Führungshülse im Vergleich zu ihrem Endabschnitt und dem Außendurchmesser der Fördereinrichtung, also durch ihren sich über die Länge der Führungshülse verjüngenden Querschnitt, wird die Einführung der Fördereinrichtung und damit insgesamt die Kopplung zwischen Fahrzeug und Bearbeitungseinheit wesentlich vereinfacht und damit gegenüber bekannten Ausführungen verbessert.

Die Erfindung lässt sich einfach umsetzen, wobei sogar die Möglichkeit besteht, bereits vorhandene Vorrichtungen zur Pflege von Grünflächen mit einer derartigen Führungshülse nachzurüsten. Wesentliche konstruktive oder bauliche Veränderungen sind hierfür nicht erforderlich, was einen weiteren, entscheidenden Vorteil der Erfindung darstellt.

An dieser Stelle ist anzumerken, dass es sich bei der Bearbeitungseinheit im erfindungsgemäßen Sinne beispielsweise um ein Mähwerk oder eine Vertikutiereinrichtung zur Rasen- oder Wiesenpflege handeln kann, wobei auch Harken, Grubber, Eggen oder andere Bodenbearbeitungsgeräte als Bearbeitungseinheit nutzbar sind.

Eine erste Ausgestaltung der Erfindung ist darin zu sehen, dass der sich verjüngende Querschnitt der Führungshülse wenigstens abschnittsweise einen konischen oder polygonalen Verlauf aufweist.

Während eine konische Ausführung der Führungshülse meist erhebliche fertigungstechnische Vorteile bietet, da die Führungshülse durch eine einfache Blechumformung hergestellt werden kann, besteht bei der polygonalen, also vieleckigen Ausführung der Führungshülse ein Vorteil in der vereinfachten Befestigung innerhalb des Fahrzeugs. Da eine polygonale Ausführung der Führungshülse zumindest abschnittsweise ebene Flächenelemente aufweist, können hieran zum Beispiel problemlos Befestigungselemente fixiert werden.

Eine weiterbildende Maßnahme der Erfindung besteht darüber hinaus darin, dass der sich verjüngende Querschnitt der Führungshülse zumindest im einführungsseitigen Mündungsbereich der Führungshülse gegeben ist. Mit anderen Worten kann die Führungshülse bei dieser Variante über einen Teil ihrer Länge betrachtet auch weiterhin einen röhrenförmigen oder kreiszylindrischen Querschnitt aufweisen.

Von Bedeutung ist hierbei lediglich, dass der Mündungsbereich der Führungshülse über einen vergleichsweise größeren Öffnungsquerschnitt auch gegenüber der einzuführenden Fördereinrichtung verfügt. Ist nämlich die Verbindung zwischen der Fördereinrichtung und der Führungshülse erst einmal hergestellt, so gestaltet sich die weitere Einführung der Fördereinrichtung in die Führungshülse unproblematisch.

Einen besonderen Vorteil stellt eine spezielle Ausführungsvariante dar, bei der der einführungsseitige Mündungsbereich der Führungshülse derart erweitert ist, dass er einen wenigstens 1,5-fachen, vorzugsweise einen 2-fachen oder sogar einen mehrfachen Querschnitt, verglichen mit dem übrigen Querschnitt der Führungshülse und/oder der Fördereinrichtung aufweist. Diese Lösung ist dabei unabhängig von der Länge des Mündungsbereiches im Verhältnis zur Länge der Führungshülse umsetzbar. Je größer der Querschnitt des Mündungsbereiches der Führungshülse ausgeführt wird, desto einfacher gestaltet sich die Herstellung der Verbindung zwischen dem Fahrzeug und der Bearbeitungseinheit.

Ein fertigungstechnisch einfach auszuführendes Beispiel für eine Fertigungshülse nach der Erfindung besteht darin, dass der Querschnitt der Führungshülse über ihre gesamte Länge hinweg sich verjüngend ausgeführt ist. Ausgehend von dem erweiterten Mündungsbereich, dessen Öffnungsquerschnitt in jedem Fall die größten Abmessungen der gesamten Länge der Führungshülse aufweist, erstreckt sich die Führungshülse folglich kontinuierlich, also mit gleichmäßig abnehmendem Querschnitt, von dem Mündungsbereich weg.

Eine zusätzliche Verbesserung gegenüber bekannten Ausführungen nach dem Stand der Technik wird erfindungsgemäß auch darin gesehen, dass das in Einführungsrichtung der Fördereinrichtung in die Führungshülse betrachtete Ende der Führungshülse als ein Führungslager der Fördereinrichtung ausgebildet ist. Somit ist durch die Erfindung nicht nur die Einführung der Fördereinrichtung in die Führungshülse wesentlich vereinfacht worden. Es wird darüber hinaus auch eine Möglichkeit geschaffen, das Ende der Fördereinrichtung in sinnvoller Weise innerhalb der Führungshülse zu lagern, ohne dass es hierfür wesentlicher konstruktiver Aufwendungen bedarf. Die Führungshülse selbst bildet dabei die erwähnte Lagerstelle oder weist endseitig ein geeignetes Lager auf.

Im einfachsten Fall wird das als Führungslager ausgeführte Ende der Führungshülse kreiszylinderförmig ausgebildet, so dass die Fördereinrichtung bzw. dessen Förderrohr unmittelbar in der Führungshülse geführt werden kann.

Wie eingangs bereits ausgeführt wurde, kann die Bearbeitungseinheit der Vorrichtung zur Pflege von Grünflächen beispielsweise ein Mähwerk oder eine Vertikutiereinrichtung sein. Darüber hinaus geht ein weiterführender Vorschlag nach der Erfindung dahin, dass die Fördereinrichtung eine in einem Förderrohr um eine Rotationsachse drehbar gelagerte Förderschnecke ist. Mittels dieser Förderschnecke wird beispielsweise durch die Bearbeitungseinheit aufgebrachtes oder abgetrenntes Gut in einen Auffangbehälter der Vorrichtung zur Pflege von Grünflächen transportiert und dort bis zur Entsorgung aufbewahrt oder einfach ausgeworfen. Alternativ hierzu kann ein weiteres Fahrzeug mit einer Ladefläche parallel zu der Vorrichtung bewegt werden, so dass die Abfälle unmittelbar auf die Ladefläche des zweiten Fahrzeugs abgegeben werden können und dieses dann für den Abtransport derselben sorgt.

Zur Erleichterung der Kopplung zwischen dem Fahrzeug und der Bearbeitungseinheit ist darüber hinaus entsprechend einer Weiterbildung der Erfindung vorgesehen, dass eine mechanische oder hydraulische Kupplung vorhanden ist. Insbesondere eine hydraulische oder elektromagnetische Kupplung weist den entscheidenden Vorteil auf, dass hiermit ein hohes Maß an Automatisierung ermöglicht wird. Schwierige manuelle Tätigkeiten bei der Kopplung zwischen Fahrzeug und Bearbeitungseinheit werden erleichtert beziehungsweise vermieden.

Eine sehr vorteilhafte Maßnahme besteht ferner in einer erfindungsgemäßen Ausgestaltungsvariante, die darin zu sehen ist, dass einseitig an der Kupplung ein die Zusammenführung der Kupplungsglieder erleichternder Einführungstrichter vorhanden ist. Dabei kann der Einführungstrichter sowohl an dem Kupplungsglied des Fahrzeugs, als auch am Kupplungsglied der Bearbeitungseinheit vorgesehen werden. Maßgeblich ist hierbei lediglich, dass das jeweils korrespondierende, zweite Kupplungsglied ohne große Mühe mit dem Kupplungsglied verbunden werden kann, das den Einführungstrichter aufweist. Der Einführungstrichter kann auch lösbar an dem Kupplungsglied befestigt werden, so dass er nicht dauerhaft in Kupplungsbereich verbleiben muss.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Fig. 1:: eine schematisch stark vereinfachte Explosivdarstellung einer Vorrichtung zur Pflege von Grünflächen in räumlicher Ansicht und unter teilweiser Weglassung einiger Verkleidungsteile,
- Fig. 2:: eine Seitenansicht der Vorrichtung aus Fig. 1,
- Fig. 3:: ausschnittsweise eine teilweise geschnittene Darstellung einer Vorrichtung zur Pflege von Grünflächen in einer ersten Ausführungsvariante,
- Fig. 4:: ausschnittsweise eine teilweise geschnittene Darstellung einer Vorrichtung zur Pflege von Grünflächen in einer weiteren Ausführungsvariante
Und
- Fig. 5:: ausschnittsweise eine teilweise geschnittene Darstellung einer Vorrichtung zur Pflege von Grünflächen in einer gekoppelten Position.

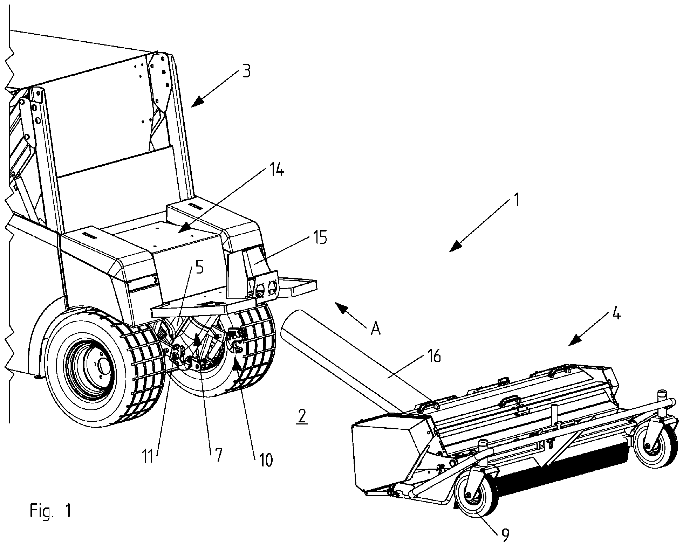

Aus der Fig. 1 geht eine schematisch stark vereinfachte Explosivdarstellung einer Vorrichtung 1 zur Pflege von Grünflächen 2 in räumlicher Ansicht und unter teilweiser Weglassung einiger Verkleidungsteile hervor. Diese setzt sich im Wesentlichen aus einem Fahrzeug 3 und einer mit dem Fahrzeug 3 koppelbaren Bearbeitungseinheit 4 zusammen, wobei die Bearbeitungseinheit 4 im vorliegenden Fall als ein Mähwerk ausgeführt ist. Die Bearbeitungseinheit 4 verfügt in ihrem frontseitigen Abschnitt über zwei koaxial zueinander angeordnete und pendelnd gelagerte Räder 9, mittels derer die als Mähwerk ausgeführte Bearbeitungseinheit 4 verfahrbar ist. Die übrigen Bestandteile einer derartigen Bearbeitungseinheit sind überwiegend bekannt und für die vorliegende Beschreibung der Erfindung nicht von entscheidender Bedeutung. Wesentlich ist jedoch an der Bearbeitungseinheit 4, dass diese auf ihrer der Fahrtrichtung abgewandten Rückseite über ein Schutzrohr 16 verfügt, in dem eine in der Fig. 1 nicht gezeigte Fördereinrichtung 6 in Form einer in einem Förderrohr drehbar gelagerten Förderschnecke ist. Die Aufgabe dieser Fördereinrichtung 6 besteht darin, die von der Bearbeitungseinheit 4 abgetrennten oder aufgesammelten Bestandteile der zu pflegenden Grünfläche 2 zu transportieren und beispielsweise in einen an dem Fahrzeug 3 vorhandenen, in der Fig. 1 ebenfalls nicht gezeigten Auffangbehälter abzuführen. Der Vorteil der Möglichkeit, eine Trennung zwischen dem Fahrzeug 3 und der Bearbeitungseinheit 4 vorzunehmen, besteht beispielsweise darin, dass dadurch die Wartung und/oder der Transport der Bearbeitungseinheit 4 vereinfacht ist. Das Fahrzeug 3 wird durch einen eigenen Antriebsmotor angetrieben und weist zu seiner Fortbewegung sämtliche, für ein derartiges Fahrzeug erforderlichen Bauteile auf, um beispielsweise auch im Straßenverkehr bewegt werden zu können. Selbstverständlich sind auch Ausführungen möglich, die mittels eines Transporters an den Ort der Bearbeitung einer Grünfläche 2 verbracht werden. Bei derartigen Vorrichtungen 1 zur Pflege von Grünflächen 2 sind beispielsweise keine Fahrzeugbeleuchtungen erforderlich, da diese nicht im öffentlichen Straßenverkehr bewegt werden müssen.

Bei dem in der Fig. 1 gezeigten Fahrzeug 3 wurden aus Vereinfachungsgründen verschiedene Verkleidungsteile beziehungsweise Bestandteile nicht zeichnerisch dargestellt. So weist dieses Fahrzeug 3 beispielsweise lediglich eine Fläche 14 für eine Sitzmontage auf. Anders ausgedrückt ist die Fläche 14 dazu geeignet, einen Fahrersitz zu montieren. Weiterhin verfügt das Fahrzeug 3 frontseitig, also vor der Fläche 14 für die Sitzmontage über einen Unterbau 15, der zur Anbringung einer Lenkeinrichtung, also eines Lenkrades mit einer Lenksäule dient.

Zur Verbindung der Bearbeitungseinheit 4 mit dem Fahrzeug 3 weist das Fahrzeug 3 in seinem frontseitigen Bereich unterhalb des Unterbaus 15 für die Lenkeinrichtung und mittig zwischen den in der Fig. 1 gezeigten Fahrzeugrädern eine Führungshülse 5 auf, deren öffnungsseitiger Mündungsbereich 7 einen trichterförmig erweiterten Querschnitt aufweist. Anders ausgedrückt ist die Führungshülse 5 derart gestaltet, dass sich in Einführungsrichtung der Fördereinrichtung 6 betrachtet, ihr Querschnitt verjüngt. In die Führungshülse 5 wird das Schutzrohr 16 zusammen mit der darin enthaltenen Fördereinrichtung 6 in Richtung des Pfeils A eingeführt, wobei gleichzeitig eine Kopplung zwischen Fahrzeug 3 und Bearbeitungseinheit 4 hergestellt wird. Zur Kopplung werden zwei miteinander korrespondierende Kupplungsglieder 11 und 12 miteinander verbunden, von denen sich das Kupplungsglied 11 am Fahrzeug 3 befindet, während das Kupplungsglied 12 in der Fig. 1 nicht sichtbar an der Bearbeitungseinheit 4 angeordnet ist. Zusammen bilden die Kupplungsglieder 11 und 12 damit eine Kupplung 10.

Nach dem Einführen der Fördereinrichtung 6 in die Führungshülse 5 und der Herstellung einer lösbaren Kupplung zwischen Fahrzeug 3 und Bearbeitungseinheit 4 kann die Pflege der Grünfläche 2 mittels der Vorrichtung 1 erfolgen.

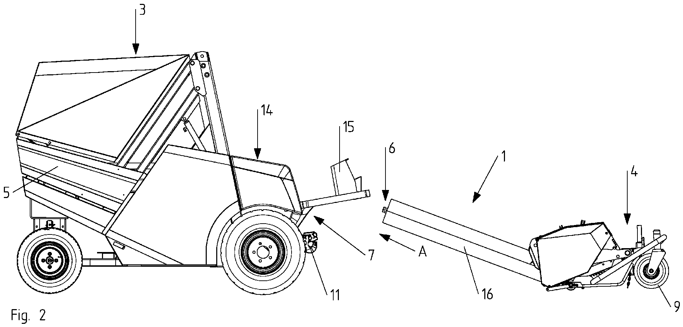

In der in Fig. 2 gezeigten Seitenansicht der Vorrichtung 1 aus Fig. 1 wird ersichtlich, dass die Führungshülse 5 sich bei diesem Beispiel, ausgehend von dem Mündungsbereich 7, kontinuierlich in ihrem Querschnitt verjüngt. Bei der dargestellten Ausführungsvariante einer Vorrichtung 1 zur Pflege von Grünflächen 2 weist die Führungshülse 5 einen durchgängig konischen Verlauf auf, wobei der Mündungsbereich 7 über den größten Querschnitt verfügt. Aus der Zeichnung wird auch ersichtlich, dass die Fördereinrichtung 6 in Form einer Förderschnecke innerhalb des Förder- und Schutzrohres 16 geführt ist, wobei lediglich ein geringer Teil der Fördereinrichtung 6 aus dem endseitigen Abschnitt des Schutzrohres 16 herausragt. Auch in dieser Darstellung ist die Einführungsrichtung der Fördereinrichtung 6 in die Führungshülse 5 durch den Pfeil A symbolisiert. Bei dem Kupplungsglied 11 der Kupplung 10 handelt es sich im vorliegenden Fall um einen Haken, der mit einem korrespondierenden, beispielsweise ösenförmigen Kupplungsglied 12 der Bearbeitungseinheit 4 verbunden werden kann.

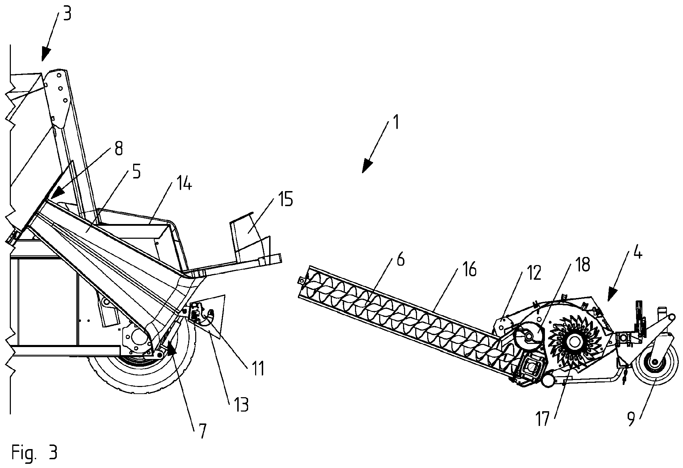

Wie darüber hinaus aus der Fig. 3 ersichtlich ist, in der ausschnittsweise eine teilweise geschnittene Darstellung der Vorrichtung 1 zur Pflege von Grünflächen 2 in einer ersten, speziellen Ausführungsvariante veranschaulicht wird, kann die Führungshülse 5 auch einen erweiterten Mündungsbereich 7 aufweisen, so dass sie in der Seitenansicht eine Trichterform aufweist. Im Anschluss an den erweiterten Mündungsbereich 7 verjüngt sich der Querschnitt der Führungshülse 5 kontinuierlich in konischer Form.

Eine Besonderheit der Darstellung in Fig. 3 besteht darüber hinaus darin, dass der endseitige Abschnitt der Führungshülse 5 gleichzeitig ein Führungslager 8 bildet, was bedeutet, dass der Innenquerschnitt der Führungshülse 5 in diesem Endabschnitt annähernd dem Außenquerschnitt des Förder- und Schutzrohres 16 mit der darin geführten Fördereinrichtung 6 entspricht. Folglich bildet der Endabschnitt der Führungshülse 5 dadurch eine Art Lagerstelle.

Eine weitere Besonderheit der Ausführungsvariante in Fig. 3 ist darin zu sehen, dass auf das Kupplungsglied 11 der Kupplung 10 ein Einführungstrichter 13 lösbar aufgesetzt ist, der die Zusammenführung der Kupplungsglieder 11 und 12 in entscheidendem Maße erleichtert. Das zum Kupplungsglied 11 korrespondierende Kupplungsglied 12 befindet sich an passender Stelle der Bearbeitungseinheit 4, bei dem ein quer zur Fahrtrichtung ausgerichteter Bolzen in einem Flansch aufgenommen ist, so dass dieser Bolzen in das hakenförmige Kupplungsglied 11 eingesetzt werden kann, wenn die Fördereinrichtung 6 vollständig in die Führungshülse 5 eingeführt worden ist.

Aus der Schnittdarstellung der Bearbeitungseinheit 4 der Fig. 3 geht darüber hinaus hervor, dass die als Mähwerk ausgeführte Bearbeitungseinheit 4 in an sich bekannter Weise über einen um eine Rotationsachse drehbar gelagerten Bearbeitungsrotor 17 verfügt, der in einem nicht näher bezeichneten Gehäuse aufgenommen ist und die von der Grünfläche 2 abgetrennten oder aufgenommenen Bestandteile mittels einer quer zur Fördereinrichtung 6 angeordneten Transportschnecke 18 etwa mittig der Bearbeitungseinheit 4 zusammenführt, um die erwähnten Bestandteile in diesem Bereich an die Fördereinrichtung 6 zu übergeben, die in der zuvor bereits beschriebenen Weise die Grünabfälle in einen Auffangbehälter des Fahrzeugs 3 abtransportiert.

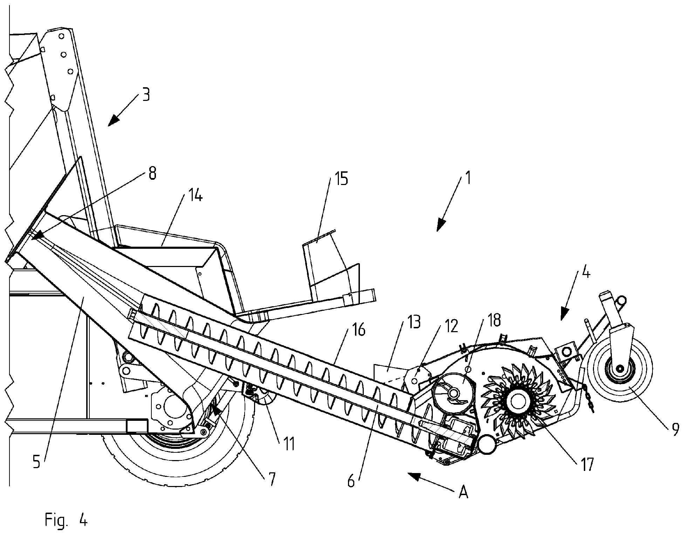

Die Fig. 4 zeigt eine weitere Ausführungsvariante einer Vorrichtung 1 zur Pflege von Grünflächen 2, wobei hier die Fördereinrichtung 6 bereits teilweise in Richtung des Pfeils A in die Führungshülse 5 eingeführt worden ist. Die Besonderheit der Darstellung in Fig. 4 besteht darin, dass das Kupplungsglied 11 wiederum hakenförmig ausgebildet ist und diesmal an dem korrespondierenden Kupplungsglied 12 ein Einführungstrichter 13 angeordnet ist, der die Kopplung der Kupplungsglieder 11 und 12 wesentlich vereinfacht. Der Einführungstrichter 13 kann je nach Ausführung auch bei gekoppelten Kupplungsgliedern 11 und 12 an der Kupplung 10 verbleiben. Er ist in einem solchen Fall beispielsweise geeignet, Verunreinigungen der Kupplung 10 zu reduzieren oder zu vermeiden.

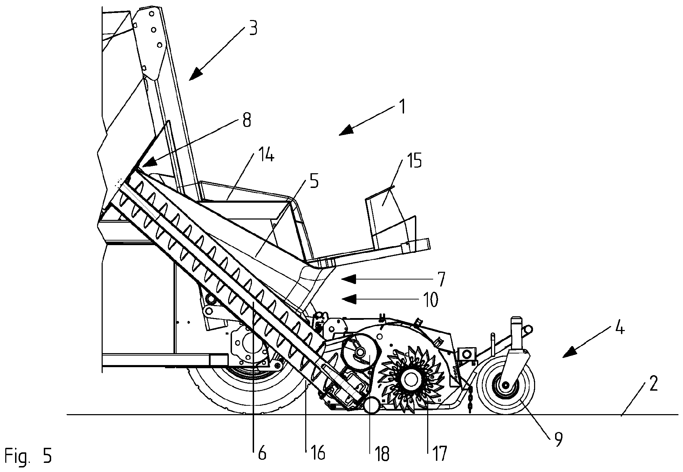

Schließlich veranschaulicht die Darstellung in Fig. 5 eine komplettierte Vorrichtung 1 zur Pflege von Grünflächen 2. Hierbei ist die Fördereinrichtung 6 mit ihrem Schutzrohr 16 vollständig in die Führungshülse 5 eingesetzt und die Kupplung 10 zwischen den Kupplungsgliedern 11 und 12 hergestellt. Aus der Darstellung wird nochmals anschaulich erkennbar, dass der Mündungsbereich 7 der Führungshülse 5 einen wesentlich größeren Querschnitt aufweist, als der endseitige Abschnitt der Führungshülse 5, der, wie bereits ausgeführt wurde, als Führungslager 8 für die Fördereinrichtung 6 dient.

### BEZUGSZEICHENLISTE:

- 1: Vorrichtung zur Pflege von Grünflächen
- 2: Grünfläche
- 3: Fahrzeug
- 4: Bearbeitungseinheit
- 5: Führungshülse
- 6: Fördereinrichtung
- 7: Mündungsbereich
- 8: Führungslager
- 9: Rad
- 10: Kupplung
- 11: Kupplungsglied
- 12: Kupplungsglied
- 13: Einführungstrichter
- 14: Fläche für die Sitzmontage
- 15: Unterbau für die Lenkeinrichtung
- 16: Schutzrohr
- 17: Bearbeitungsrotor
- 18: Transportschnecke

## Patentansprüche

1. Vorrichtung (1) zur Pflege von Grünflächen (2), insbesondere von Rasen- und Wiesenflächen, umfassend ein angetriebenes Fahrzeug (3) und eine mit dem Fahrzeug (3) koppelbare Bearbeitungseinheit (4), wobei das Fahrzeug (3) zur Ankopplung der Bearbeitungseinheit (4) eine Führungshülse (5) aufweist, in die eine Fördereinrichtung (6) der Bearbeitungseinheit (4) einführbar ist, **dadurch gekennzeichnet, dass** die Führungshülse (5) einen sich in Einführungsrichtung der Fördereinrichtung (6) zumindest abschnittsweise verjüngenden Querschnitt aufweist.

2. Vorrichtung zur Pflege von Grünflächen nach Anspruch 1, **dadurch gekennzeichnet, dass** der sich verjüngende Querschnitt der Führungshülse (5) einen konischen oder polygonalen Verlauf aufweist.

3. Vorrichtung zur Pflege von Grünflächen nach einem der vorstehend genannten Ansprüche, **dadurch gekennzeichnet, dass** der sich verjüngende Querschnitt der Führungshülse (5) zumindest im einführungsseitigen Mündungsbereich (7) der Führungshülse (5) gegeben ist.

4. Vorrichtung zur Pflege von Grünflächen nach einem der vorstehend genannten Ansprüche, **dadurch gekennzeichnet, dass** der einführungsseitige Mündungsbereich (7) der Führungshülse (5) erweitert ist und einen wenigstens 1,5-fachen, vorzugsweise einen 2-fachen oder mehrfachen Querschnitt, verglichen mit dem übrigen Querschnitt der Führungshülse (5) und/oder Fördereinrichtung (6) aufweist.

5. Vorrichtung zur Pflege von Grünflächen nach einem der vorstehend genannten Ansprüche, **dadurch gekennzeichnet, dass** der Querschnitt der Führungshülse (5) über ihre gesamte Länge hinweg sich vorzugsweise gleichmäßig verjüngend ausgeführt ist.

6. Vorrichtung zur Pflege von Grünflächen nach einem der vorstehend genannten Ansprüche, **dadurch gekennzeichnet, dass** das in Einführungsrichtung der Fördereinrichtung (6) in die Führungshülse (5) betrachtete Ende der Führungshülse (5) als ein Führungslager (8) der Fördereinrichtung (6) ausgebildet ist.

7. Vorrichtung zur Pflege von Grünflächen nach Anspruch 6, **dadurch gekennzeichnet, dass** das als Führungslager (8) ausgeführte Ende der Führungshülse (5) kreiszylinderförmig ausgebildet ist.

8. Vorrichtung zur Pflege von Grünflächen nach einem der vorstehend genannten Ansprüche, **dadurch gekennzeichnet, dass** die Fördereinrichtung (6) eine um eine Rotationsachse drehbar gelagerte Förderschnecke ist.

9. Vorrichtung zur Pflege von Grünflächen nach einem der vorstehend genannten Ansprüche, **dadurch gekennzeichnet, dass** zwischen dem Fahrzeug (3) und der Bearbeitungseinheit (4) eine mechanische, hydraulische oder elektromagnetische Kupplung (10) vorhanden ist.

10. Vorrichtung zur Pflege von Grünflächen nach Anspruch 9, **dadurch gekennzeichnet, dass** einseitig an der Kupplung (10) ein die Zusammenführung der Kupplungsglieder (11, 12) erleichternder Einführungstrichter (13) vorhanden ist.
